# NEUE EUROPÄISCHE PATENTSCHRIFT

(11) **EP 3 526 490 B2**
(45) Veröffentlichungstag und Bekanntmachung des Hinweises auf die Entscheidung über den Einspruch: **22.05.2024**
(45) Hinweis auf die Patenterteilung: 02.12.2020
(21) Anmeldenummer: 17745330.5
(22) Anmeldetag: 28.07.2017
(51) Int. Cl.: F16G 13/16, H02G 11/00

(54) **KETTENGLIED FÜR EINE ENERGIEFÜHRUNGSKETTE**
CHAIN LINK FOR AN ENERGY GUIDING CHAIN
MAILLON DE CHAÎNE POUR UNE CHAÎNE DE TRANSMISSION D'ÉNERGIE

(30) Priorität: 13.10.2016 DE 102016012144
(43) Veröffentlichungstag der Anmeldung: 21.08.2019
(73) Patentinhaber: Murrplastik Systemtechnik GmbH, 71570 Oppenweiler (DE)
(72) Erfinder: KONRADI, Alexander, 71570 Oppenweiler (DE)
(74) Vertreter: Patentanwälte Bregenzer und Reule Partnerschaftsgesellschaft mbB
(86) Internationale Anmeldenummer: PCT/EP2017/069115
(87) Internationale Veröffentlichungsnummer: WO 2018/068915

(56) Entgegenhaltungen:
- DE-A1- 19 547 215
- DE-A1- 19 609 146
- DE-A1- 19 810 960
- DE-A1-102009 030 798
- DE-U1- 9 102 121

## Beschreibung

Die Erfindung betrifft ein Kettenglied für eine Energieführungskette gemäß Oberbegriff des Anspruchs 1.

Solche Kettenglieder sind beispielsweise aus der DE 43 13 242 A1 bekannt. Werden solche Kettenglieder in der Längsrichtung gelenkig miteinander verbunden, so bilden sie eine Energieführungskette zur Aufnahme und Führung von Leitungen wie beispielsweise Kabeln, Druckluftschläuchen oder Kühlwasserschläuchen. Die Leitungen sind im Aufnahmekanal aufgenommen, der bei jedem Kettenglied von zwei Seitengliedern und die Seitenglieder miteinander verbindenden oberen und unteren Rahmenstegen umschlossen wird. Um verschiedene Leitungen getrennt voneinander im Aufnahmekanal zu führen, wird dieser durch parallel zu den Seitengliedern und quer zu den Rahmenstegen verlaufende Trennstege sowie parallel zu den Rahmenstegen und quer zu den Trennstegen verlaufende Regalböden in Teilkanäle unterteilt. Dabei ist mindestens ein erster Regalboden mit seinen beiden Enden in jeweils einen Durchbruch in einem Trennsteg eingesteckt und dort verrastet. Solche Kettenglieder haben aber den Nachteil, dass durch die quer zur Kettenlängsrichtung gemessene Breite des Regalbodens der Abstand der Trennstege, mit denen der Regalboden verbunden ist, vorgegeben ist. Um Teilkanäle unterschiedlicher Breite erzielen zu können, müssen Regalböden unterschiedlicher Breite vorgehalten werden. Dies ist aufwendig. Aus der DE 91 02 121 U1 ist eine Energieführungskette bekannt, deren Regalböden mit den Trennstegen in rastenden Eingriff gebracht werden können. Die Regalböden weisen aber nur an einer Längsseite eine Zahnreihe auf, während die andere Längsseite glatt ausgebildet ist. Ein Durchschieben eines Regalbodens in einer Richtung parallel zu seinen Längsseiten durch einen für seine Aufnahme vorgesehenen Durchbruch in einem Trennsteg ist nicht möglich, da er im Durchbruch unverschiebbar gehalten wird. Ein Einführen in den Durchbruch erfolgt vielmehr über einen seitlichen Einführschlitz. Aus der DE 195 47 215 A1 ist ein Kettenglied für eine Energieführungskette bekannt, das Trennstege und mit dem Trennsteg lösbar verbundenen Regalböden aufweist.

Es ist daher Aufgabe der Erfindung, ein Kettenglied der eingangs genannten Art derart weiterzubilden, dass es flexibler einsetzbar ist.

Diese Aufgabe wird erfindungsgemäß durch ein Kettenglied mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, zumindest den ersten Regalboden in unterschiedlichen Positionen im ersten Durchbruch des ersten Trennstegs mittels einer Rastverbindung befestigen zu können. Insbesondere kann der erste Regalboden durch den ersten Durchbruch durchgeführt werden, so dass er am ersten Trennsteg im Abstand zu seinen freien Enden befestigt werden kann, während seine freien Enden an anderen Trennstegen oder den Seitengliedern befestigt werden können. Auf diese Weise kann mit einer einzigen Regalbodengröße die Unterteilung des Aufnahmekanals in Teilkanäle verschiedener Größe erzielt werden. Desweiteren ist es möglich, dass Regalböden unterschiedlicher Breite von einem Standardregalboden abgelängt werden, insbesondere wenn, wie bei einer vorteilhaften Ausgestaltung der Erfindung vorgesehen, die Rastmittel des ersten Regalbodens in gleichen Abständen zueinander über dessen Breite verteilt sind. Der Abstand der Raststellen zueinander ist dabei zweckmäßig höchstens doppelt so groß wie und vorzugsweise kleiner als die quer zur Längsrichtung gemessene Dicke des ersten Trennstegs.

Die zueinander komplementären Rastmittel weisen zweckmäßig einerseits Rastvertiefungen und andererseits Rastvorsprünge auf. Dabei wird bevorzugt, dass der erste Regalboden mit Rastvertiefungen und der erste Durchbruch mit Rastvorsprüngen versehen ist.

Gemäß der Erfindung ist der erste Regalboden im Querschnitt H-förmig, wobei sich die vier Schenkel des H zu den Schmalseiten des ersten Durchbruchs erstrecken und die Rastmittel des ersten Regalbodens an den einander zugewandten Innenseiten der Schenkel angeordnet sind. Dabei wird bevorzugt, dass an den Schmalseiten des ersten Durchbruchs zwischen die Schenkel des H eingreifende, die Rastmittel des ersten Durchbruchs tragende Eingriffselemente angeordnet sind. Eine Rastverbindung wird dann mit jedem der vier Schenkel des H erzielt, wobei die einander paarweise gegenüber liegenden Schenkel beim Einführen des ersten Regalbodens in den ersten Durchbruch sowie beim Lösen der Rastverbindung elastisch federnd voneinander weg bewegt werden. Letzteres wird dadurch erleichtert, dass der Abstand der Längsseiten des ersten Durchbruchs sich zweckmäßig von dessen Mitte zu den Schmalseiten hin vergrößert, so dass genug Platz für die freien Enden der Schenkel des H vorhanden ist, um gegen die elastische Rückstellkraft voneinander weg bewegt zu werden. Zudem wird bevorzugt, dass die Längsseiten des ersten Durchbruchs in dessen Mitte in einem kleineren Abstand zum ersten Regalboden angeordnet sind als an den Schmalseiten und vorzugsweise in der Mitte am ersten Regalboden anliegen.

Zweckmäßig weist der erste Trennsteg mehrere identisch ausgebildete, mit Rastmitteln versehene Durchbrüche auf, so dass der erste Regalboden in unterschiedlichen Höhen im Kettenglied angeordnet werden kann. Selbstverständlich können im Aufnahmekanal mehrere Trennstege und/oder mehrere Regalöden angeordnet sein, die jeweils baugleich mit dem ersten Trennsteg bzw. dem ersten Regalboden ausgebildet sein können. Es ist jedoch auch möglich, in einem Kettenglied den ersten Regalboden und den ersten Trennsteg sowie gegebenenfalls weitere, baugleiche Regalböden bzw. Trennstege mit herkömmlichen Regelböden und/oder herkömmlichen Trennstegen zu kombinieren.

Im Folgenden wird die Erfindung anhand zweier in der Zeichnung schematisch dargestellter Ausführungsbeispiele näher erläutert. Es zeigen
- Fig. 1: ein Kettenglied einer Energieführungskette in perspektivischer Ansicht;
- Fig. 2a bis 2c: zwei Trennstege mit eingestecktem Regalboden in perspektivischer Ansicht, in Seitenansicht und in einer Schnittdarstellung gemäß einem ersten Ausführungsbeispiel;
- Fig. 2d: drei Trennstege mit eingestecktem Regalboden gemäß einer Variante des ersten Ausführungsbeispiels;
- Fig. 3a, 3b: zwei Trennstege mit an ihnen befestigtem Regalboden in perspektivischer Darstellung und in Seitenansicht gemäß einem nicht erfindungsgemäßen zweiten Ausführungsbeispiel.

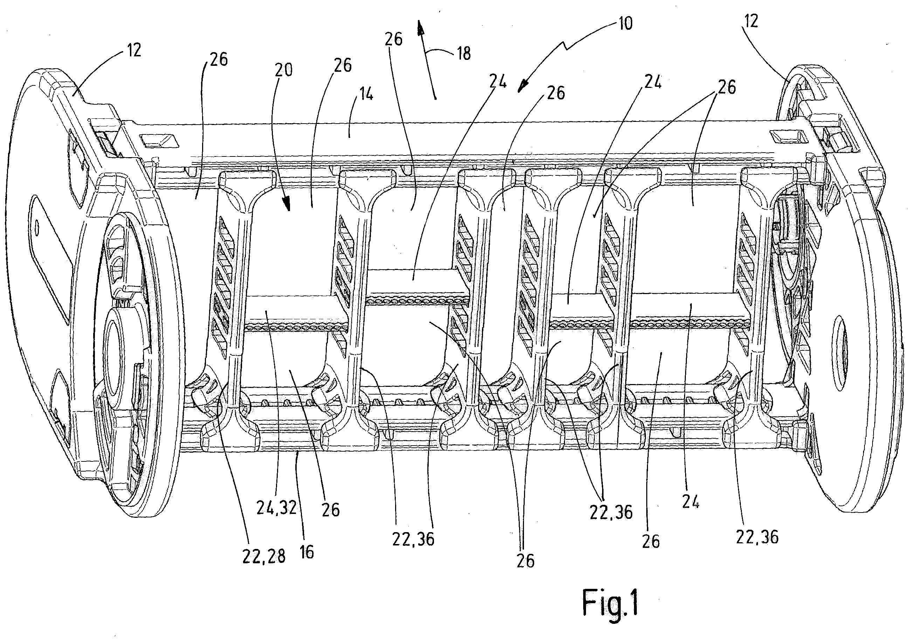

Das in Fig. 1 dargestellte Kettenglied 10 einer Energieführungskette weist zwei im Abstand zueinander angeordnete Seitenglieder 12 auf, die mittels eines oberen Rahmenstegs und eines unteren Rahmenstegs 16 miteinander verbunden sind. Die Seitenglieder 12 und die Rahmenstege 14, 16 schließen einen in einer Längsrichtung 18 nach vorne und hinten offenen Aufnahmekanal 20 für die Aufnahme von Leitungen wie elektrischen Kabeln, Druckluftschläuchen oder ähnlichem ein. Der Aufnahmekanal 20 ist mittels quer zu den Rahmenstegen 14, 16 verlaufenden Trennstegen 22 sowie parallel zu den Rahmenstegen 14, 16 verlaufenden Regalböden 24 in mehrere Teilkanäle 26 aufgeteilt.

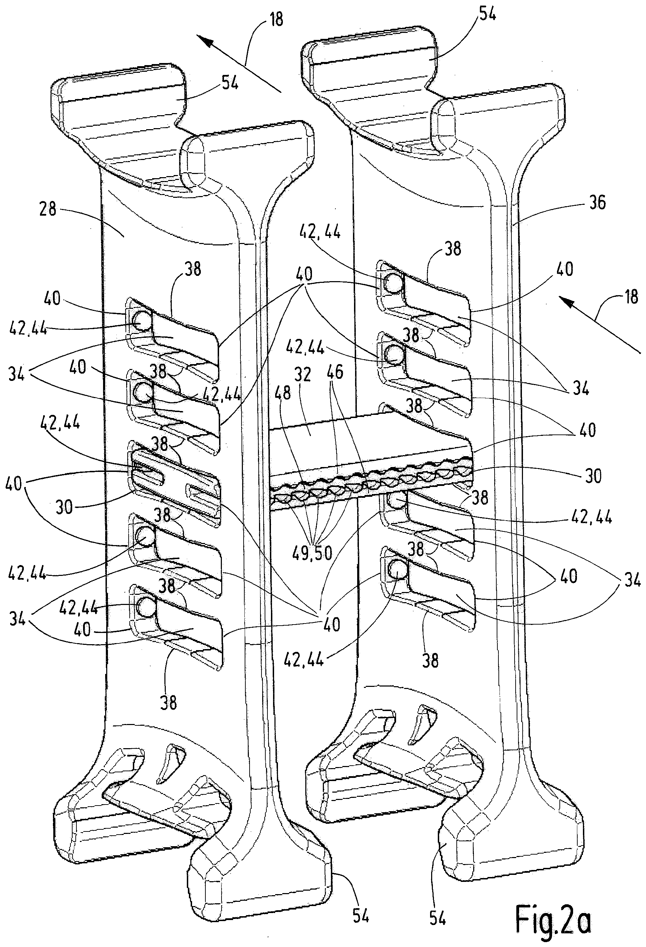

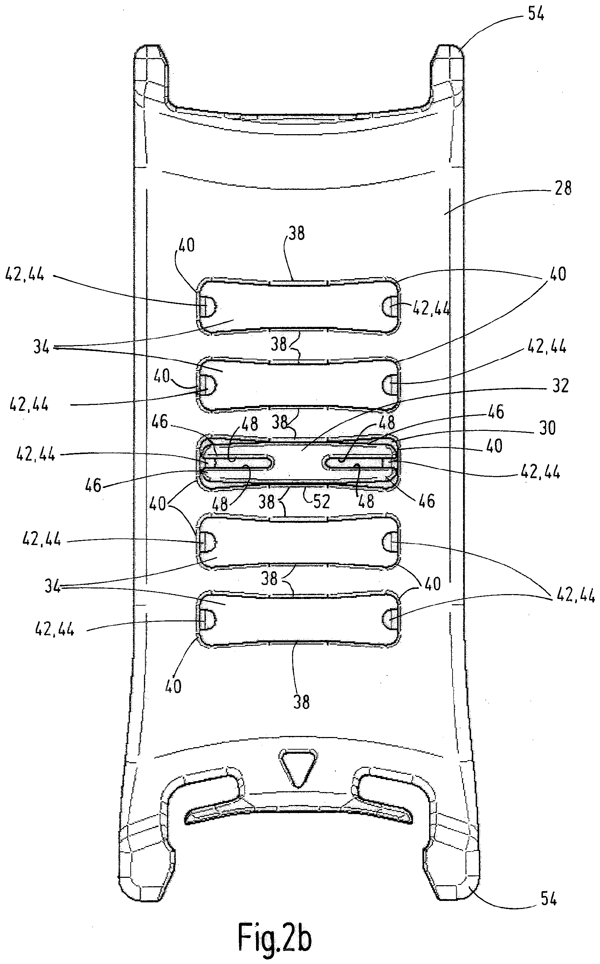

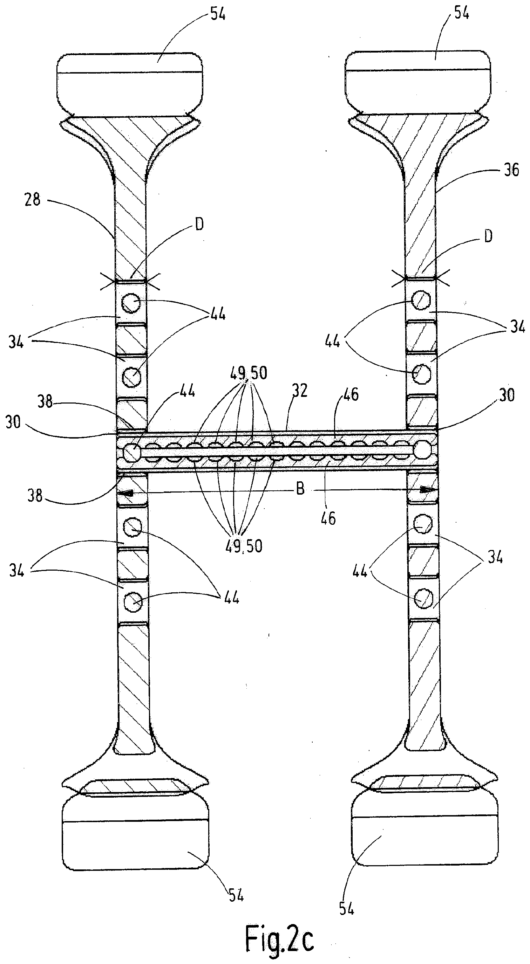

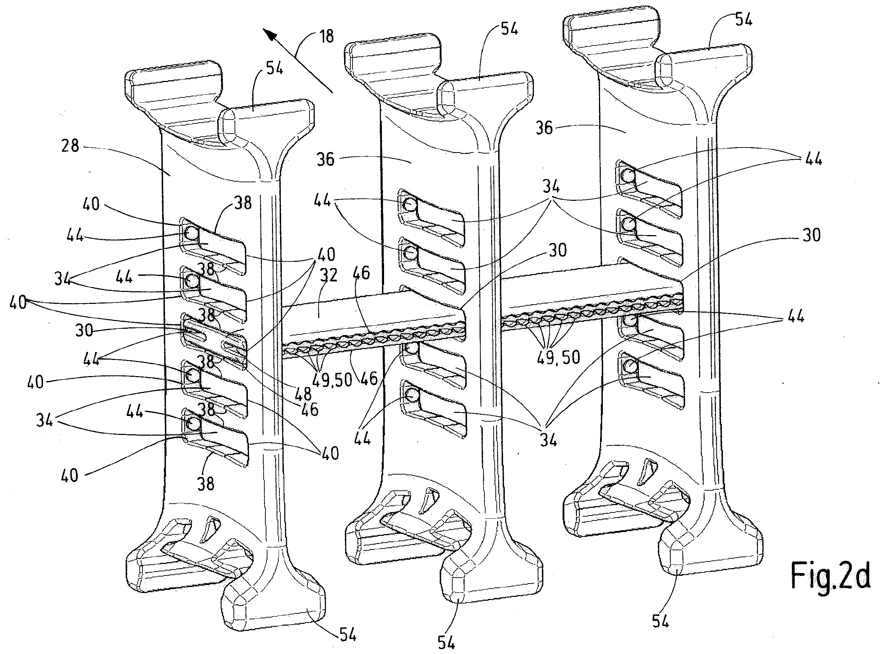

Gemäß dem ersten Ausführungsbeispiel ist ein erster Trennsteg 28 mit einem ersten Durchbruch 30 versehen, in den ein erster Regalboden 32 eingreift. Der erste Trennsteg 28 weist zudem mehrere weitere Durchbrüche 34 auf, die mit dem ersten Durchbruch 30 identisch ausgebildet sind. Zudem ist der erste Regalboden 32 auch an einem weiteren Trennsteg 36 (Fig. 2a) bzw. zwei weiteren Trennstegen 36 (Fig. 2d) befestigt, die mit dem ersten Trennsteg 28 baugleich ausgeführt sind. Der erste Regalboden 32 gemäß Darstellung der Fig. 2d ist dabei breiter ausgeführt als der erste Regalboden 32 in der Darstellung gemäß Fig. 2a.

Der erste Durchbruch 30 weist zwei sich in der Längsrichtung 18 erstreckende Längsseiten 38 sowie die Längsseiten 38 miteinander verbindende Schmalseiten 40 auf. An jeder der Schmalseiten 40 erstreckt sich ein Eingriffselement 42 auf die jeweils gegenüber liegende Schmalseite 40 zu, das einen vorstehenden Rastvorsprung 44 trägt. Der erste Regalboden 32 ist im Querschnitt H-förmig, wobei sich die vier Schenkel 46 des H jeweils in der Längsrichtung sowie im im ersten Durchbruch 30 aufgenommenen Bereich jeweils zu einer der Schmalseiten 40 erstrecken. An ihren einander zugewandten Innenseiten 48 weisen die Schenkel 46 an Raststellen 49 jeweils zu den Rastvorsprüngen 44 komplementäre Rastvertiefungen 50 auf, die einander in der Längsrichtung 18 paarweise gegenüber liegen. Die Raststellen 49 sind zudem über die gesamte Breite B des ersten Regalbodens 32 sich periodisch wiederholend in gleichen Abständen angeordnet, wobei die Abstände der Raststellen 49 kleiner sind als die in der Längsrichtung 18 gemessene Dicke D des ersten Trennstegs 28. Der erste Durchbruch 30 ist in seiner Mitte 52 zwischen den beiden Schmalseiten 40 schmaler ausgebildet als im Bereich an den Schmalseiten 40, zu denen hin er sich aufweitet. In der Mitte 52 liegt der erste Regalboden 32 mit geringem Spiel an den Längsseiten 38 an, während nahe den Schmalseiten 40 genügend Platz für ein elastisches Aufspreizen der Schenkel 46 vorhanden ist, um die Rastverbindung zu lösen. Während bei der Anordnung gemäß Fig. 2a bis 2c lediglich zwei Trennstege 28, 36 mit dem ersten Regalboden 32 verbunden sind, sind bei der Anordnung gemäß Fig. 2d drei Trennstege 28, 36 durch den ersten Regalboden 32 verbunden, indem dieser durch den ersten Durchbruch 30 des mittleren Trennstegs 36 hindurchgeführt ist. An ihren oberen und unteren Enden weisen die Trennstege 28, 36 zudem Befestigungsmittel 54 zur Befestigung an den Rahmenstegen 14, 16 auf.

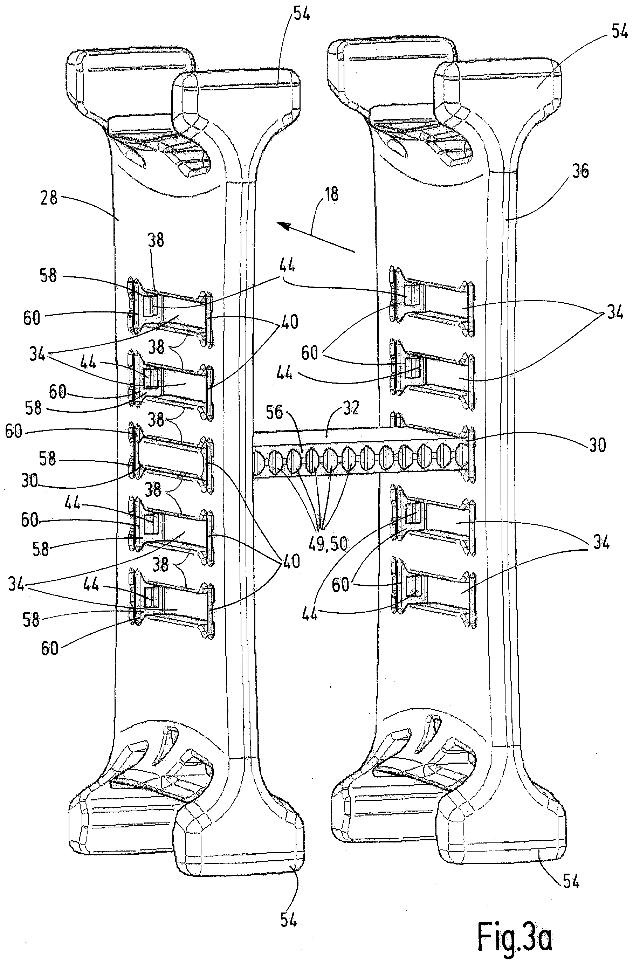

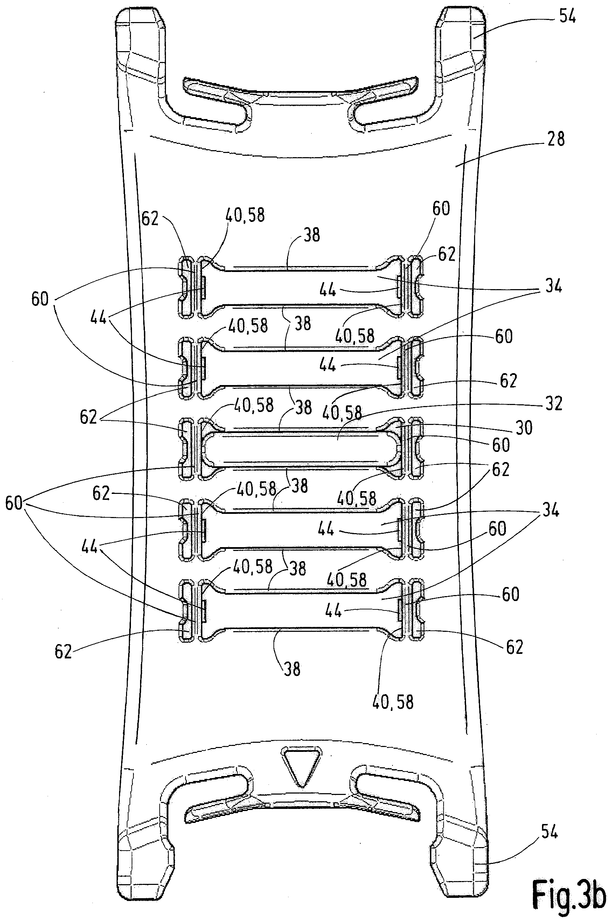

Das in Fig. 3a, 3b dargestellte zweite Ausführungsbeispiel unterscheidet sich vom ersten Ausführungsbeispiel lediglich in der Art der Rastverbindung, mit der der erste Regalboden 32 im ersten Durchbruch 30 lösbar befestigt ist. Gleiche Merkmale sind daher mit gleichen Bezugszeichen versehen.

Der erste Trennsteg 28 und der mit ihm mittels des ersten Regalbodens 32 verbundene weitere Trennsteg 36 sind wiederum baugleich ausgeführt. Der erste Trennsteg 28 weist zudem einen ersten Durchbruch 30 auf, in dem erste Regalboden 32 aufgenommen ist, sowie mehrere weitere, mit dem ersten Durchbruch 30 identische weitere Durchbrüche 34. Die den Schmalseiten 40 des ersten Durchbruchs 30 zugewandten Seitenflächen 56 des ersten Regalbodens 32 sind dabei mit den in gleichen Abständen zueinander an den Raststellen 49 angeordneten Rastvertiefungen 50 nach Art einer Zahnstange versehen, während der erste Durchbruch 30 an jeder seiner Schmalseiten 40 mit einem in Richtung zur jeweils gegenüber liegenden Schmalseite 40 vorstehenden Rastvorsprung 44 versehen ist, der komplementär zu den Rastvertiefungen 50 ausgebildet ist. Die Schmalseiten 40 sind dabei jeweils als einander zugewandte Oberflächen 58 eines von oben nach unten verlaufenden Stegs 60 ausgebildet, der den ersten Durchbruch 30 jeweils von einem Nebendurchbruch 62 trennt und elastisch biegsam ist. Beim Einführen des ersten Regalbodens 32 in den ersten Durchbruch 30 werden die Stege 60 elastisch verbogen, ebenso wie beim Herausziehen des ersten Regalbodens 32 aus dem ersten Durchbruch 30. Auch beim zweiten Ausführungsbeispiel weitet sich der erste Durchbruch 30 zu den Schmalseiten 40 hin auf, so dass eine größere Länge der Stege 60 realisiert werden kann, um diese biegsamer zu machen.

Zusammenfassend ist folgendes festzuhalten: Die Erfindung betrifft ein Kettenglied 10 für eine Energieführungskette mit zwei durch einen oberen und unteren Rahmensteg 14, 16 miteinander verbundenen Seitengliedern 12, wobei die Seitenglieder 12 und die Rahmenstege 14, 16 einen in einer Längsrichtung 18 nach vorne und hinten offenen Aufnahmekanal 20 für Leitungen umschließen, wobei im Aufnahmekanal 20 zu dessen Unterteilung in Teilkanäle 26 mindestens ein quer zu den Rahmenstegen 14, 16 verlaufender erster Trennsteg 28 und mindestens ein quer zum ersten Trennsteg 28 und quer zur Längsrichtung 18 verlaufender erster Regalboden 32 angeordnet sind, wobei der erste Trennsteg 28 mindestens einen ersten Durchbruch 30 mit zwei im Wesentlichen in Längsrichtung 18 verlaufenden Längsseiten 38 und zwei quer zur Längsrichtung 18 verlaufenden, die Längsseiten 38 miteinander verbindenden Schmalseiten 40 aufweist, in den der erste Regalboden 32 eingesteckt ist, und wobei der erste Durchbruch 30 und der erste Regalboden 32 mittels zueinander komplementärer Rastmittel 44, 50 aneinander lösbar befestigt sind, wobei die Rastmittel 44 des ersten Durchbruchs 30 an dessen Schmalseiten 40 angeordnet sind. Erfindungsgemäß ist vorgesehen, dass der erste Regalboden 32 über seine sich quer zur Längsrichtung 18 erstreckende Breite B verteilt mehr als zwei im Abstand zueinander angeordnete Raststellen 49 aufweist, an denen jeder der beiden Schmalseiten 40 zugewandt mindestens ein mit den Rastmitteln 44 des ersten Durchbruchs 30 verrastbares Rastmittel 50 angeordnet ist.

## Patentansprüche

1. Kettenglied für eine Energieführungskette mit zwei durch einen oberen und unteren Rahmensteg (14, 16) miteinander verbundenen Seitengliedern (12), wobei die Seitenglieder (12) und die Rahmenstege (14, 16) einen in einer Längsrichtung (18) nach vorne und hinten offenen Aufnahmekanal (20) für Leitungen umschließen, wobei im Aufnahmekanal (20) zu dessen Unterteilung in Teilkanäle (26) mindestens ein quer zu den Rahmenstegen (14, 16) verlaufender erster Trennsteg (28) und mindestens ein quer zum ersten Trennsteg (28) und quer zur Längsrichtung (18) verlaufender erster Regalboden (32) angeordnet sind, wobei der erste Trennsteg (28) mindestens einen ersten Durchbruch (30) mit zwei im Wesentlichen in Längsrichtung (18) verlaufenden Längsseiten (38) und zwei quer zur Längsrichtung (18) verlaufenden, die Längsseiten (38) miteinander verbindenden Schmalseiten (40) aufweist, in den der erste Regalboden (32) eingesteckt ist, und wobei der erste Durchbruch (30) und der erste Regalboden (32) mittels zueinander komplementärer Rastmittel (44, 50) aneinander lösbar befestigt sind, wobei die Rastmittel (44) des ersten Durchbruchs (30) an dessen Schmalseiten (40) angeordnet sind, **dadurch gekennzeichnet, dass** der erste Regalboden (32) über seine sich quer zur Längsrichtung (18) erstreckende Breite (B) verteilt mehr als zwei im Abstand zueinander angeordnete Raststellen (49) aufweist, an denen jeder der beiden Schmalseiten (40) zugewandt mindestens ein mit den Rastmitteln (44) des ersten Durchbruchs (30) verrastbares Rastmittel (50) angeordnet ist, und dass der erste Regalboden (32) im Querschnitt H-förmig ist, wobei sich die vier Schenkel (46) des H zu den Schmalseiten (40) des ersten Durchbruchs (30) erstrecken und die Rastmittel (50) des ersten Regalbodens (32) an den einander zugewandten Innenseiten (48) der Schenkel (46) angeordnet sind.

2. Kettenglied nach Anspruch 1, **dadurch gekennzeichnet, dass** der Abstand der Raststellen (49) zueinander höchstens doppelt so groß ist wie und vorzugsweise kleiner ist als die quer zur Längsrichtung (18) gemessene Dicke (D) des ersten Trennstegs (28).

3. Kettenglied nach Anspruch 1 oder 2, **dadurch gekennzeichnet, dass** die zueinander komplementären Rastmittel (44, 50) einerseits Rastvertiefungen (50) und andererseits Rastvorsprünge (44) aufweisen.

4. Kettenglied nach Anspruch 3, **dadurch gekennzeichnet, dass** der erste Regalboden (32) mit Rastvertiefungen (50) und der erste Durchbruch (30) mit Rastvorsprüngen (44) versehen ist.

5. Kettenglied nach einem der vorangehenden Ansprüche, **dadurch gekennzeichnet, dass** an den Schmalseiten (40) des ersten Durchbruchs (30) zwischen die Schenkel (46) des H eingreifende, die Rastmittel (44) des ersten Durchbruchs (30) tragende Eingriffselemente (42) angeordnet sind.

6. Kettenglied nach einem der vorangehenden Ansprüche, **dadurch gekennzeichnet, dass** der Abstand der Längsseiten (38) des ersten Durchbruchs (30) zueinander sich von dessen Mitte (52) zu den Schmalseiten (40) hin vergrößert.

7. Kettenglied nach einem der vorangehenden Ansprüche, **dadurch gekennzeichnet, dass** die Längsseiten (38) des ersten Durchbruchs (30) in dessen Mitte (52) in einem kleineren Abstand zum ersten Regalboden (32) angeordnet sind als an den Schmalseiten (40) und vorzugsweise in der Mitte am ersten Regalboden (32) anliegen.

8. Kettenglied nach einem der vorangehenden Ansprüche, **dadurch gekennzeichnet, dass** die Raststellen (49) in gleichen Abständen zueinander über die Breite (B) des ersten Regalbodens (32) verteilt sind.

9. Kettenglied nach einem der vorangehenden Ansprüche, **dadurch gekennzeichnet, dass** der erste Trennsteg (28) mehrere identisch ausgebildete, mit Rastmitteln (44) versehene Durchbrüche (30, 34) aufweist.

10. Kettenglied nach einem der vorangehenden Ansprüche, **dadurch gekennzeichnet, dass** im Aufnahmekanal (20) mehrere Trennstege (28, 36) angeordnet sind, die jeweils mindestens einen mit Rastmitteln (44) versehenen Durchbruch (30, 34) aufweisen, wobei alle Durchbrüche (30, 34) identisch ausgebildet sind.

## Claims

1. Chain link (10) for an energy guiding chain having two side links (12) connected to each other by a top and a bottom frame stay (14, 16), wherein the side links (12) and the frame stays (14, 16) enclose a receiving channel (20) for lines, which is open to the front and rear in a longitudinal direction (18), wherein at least one first separator (28), extending crosswise to the frame stays (14, 16) and at least one first shelf base (32), extending crosswise to the first separator (28) and crosswise to the longitudinal direction (18), are arranged in the receiving channel (20) to subdivide the receiving channel into partial channels (26), wherein the first separator (28) has at least one first opening (30) having two longitudinal sides (38), extending substantially in the longitudinal direction (18), and two narrow sides (40), extending crosswise to the longitudinal direction (18) and connecting the longitudinal sides (38) to each other, in which the first shelf base (32) is inserted, and wherein the first opening (30) and the first shelf base (32) are detachably fastened to one another by means of complementary catch means (44, 50), wherein the catch means (44) of the first opening (30) are arranged on the narrow sides (40) thereof, **characterised in that** the first shelf base (32) has more than two latching points (49) arranged at a distance from one another distributed over its width (B) extending transversally to the longitudinal direction (18), on which at least one catch means (50) that can be interlocked with the catch means (44) of the first opening (30) is arranged facing each of the two narrow sides (40) and **in that** the first shelf base (32) has an H-shaped cross section, wherein the four legs (46) of the H extend to the narrow sides (40) of the first opening (30) and the catch means (50) of the first shelf base (32) are arranged on the facing inner sides (48) of the legs (46).

2. Chain link according to claim 1, **characterised in that** the distance from one latching point (49) to another is a maximum of twice as great as and preferably smaller than the thickness (D) of the first separator (28) measured transversally to the longitudinal direction (18).

3. Chain link according to claim 1 or 2, **characterised in that** the complementary catch means (44, 50) have latching recesses (50) on one side and latching projections (44) on the other.

4. Chain link according to claim 3, **characterised in that** the first shelf base (32) is provided with latching recesses (50) and the first opening (30) with latching projections (44).

5. Chain link according to any one of the preceding claims, **characterised in that** engaging elements (42) supporting the catch means (44) of the first opening (30) are arranged on the narrow sides (40) of the first opening (30) engaging between the legs (46) of the H.

6. Chain link according to any one of the preceding claims, **characterised in that** the distance of the longitudinal sides (38) of the first opening (30) from one another, increases from the centre (52) to the narrow sides (40) of this.

7. Chain link according to any one of the preceding claims, **characterised in that** the longitudinal sides (38) of the first opening (30) are arranged in the centre (52) of this at a smaller distance from the shelf base (32) than the narrow sides (40) and preferably abut the first shelf base (32) in the centre.

8. Chain link according to any one of the preceding claims, **characterised in that the** latching points (49) are distributed at the same distances from one another over the width (B) of the first shelf base (32).

9. Chain link according to any one of the preceding claims, **characterised in that** the first separator (28) has a plurality of identically designed openings (30, 34) provided with catch means (44).

10. Chain link according to any one of the preceding claims, **characterised in that** in the receiving channel (20) a plurality of separators (28, 36) are arranged, which in each case have at least one opening (30, 34) provided with catch means (44), wherein all openings (30, 34) are identical in design.

## Revendications

1. Maillon destiné à une chaîne de transmission d'énergie, muni de deux organes latéraux (12) reliés l'un à l'autre par des barrettes d'ossature (14, 16) supérieure et inférieure, lesdits organes latéraux (12) et lesdites barrettes d'ossature (14, 16) entourant un canal (20) de réception de conducteurs ou conduits, ouvert vers l'avant et vers l'arrière dans une direction longitudinale (18), ledit canal de réception (20) renfermant, en vue de sa subdivision en des canaux partiels (26), au moins une première membrure de séparation (28) qui s'étend transversalement par rapport aux barrettes d'ossature (14, 16) et au moins une première plaquette d'échelonnement (32) qui s'étend transversalement par rapport à ladite première membrure de séparation (28), et par rapport à la direction longitudinale (18), sachant que ladite première membrure de séparation (28) est percée d'au moins une première perforation (30) comprenant deux côtés longitudinaux (38) qui s'étendent pour l'essentiel dans la direction longitudinale (18), et deux côtés étroits (40) qui s'étendent transversalement par rapport à la direction longitudinale (18) et relient mutuellement lesdits côtés longitudinaux (38), perforation dans laquelle ladite première plaquette d'échelonnement (32) est emboîtée, et sachant que ladite première perforation (30) et ladite première plaquette d'échelonnement (32) sont fixées amoviblement l'une à l'autre à l'aide de moyens encliquetables (44, 50) complémentaires les uns des autres, les moyens encliquetables (44) de la première perforation (30) étant disposés sur les côtés étroits (40) de cette dernière, **caractérisé par le fait que** la première plaquette d'échelonnement (32) comporte, avec répartition sur sa largeur (B) s'étendant transversalement par rapport à la direction longitudinale (18), plus de deux zones d'encliquetage (49) espacées l'une de l'autre, au niveau desquelles se trouve au moins un moyen encliquetable (50) tourné vers chacun des deux côtés étroits (40) et pouvant coopérer, par crantage, avec les moyens encliquetables (44) de la première perforation (30) et **par le fait que** la première plaquette d'échelonnement (32) revêt la forme d'un H en coupe transversale, les quatre jambages (46) du H s'étendant vers les côtés étroits (40) de la première perforation (30), et les moyens encliquetables (50) de ladite première plaquette d'échelonnement (32) étant disposés sur les faces intérieures (48) desdits jambages (46) qui pointent les unes vers les autres.

2. Maillon selon la revendication 1, **caractérisé par le fait que** l'espacement mutuel des zones d'encliquetage (49) est égal, au maximum, au double de l'épaisseur (D) de la première membrure de séparation (28) mesurée transversalement par rapport à la direction longitudinale (18), et est de préférence inférieur à ladite épaisseur.

3. Maillon selon la revendication 1 ou 2, **caractérisé par le fait que** les moyens encliquetables (44, 50) complémentaires les uns des autres comprennent, d'une part, des creusures d'encliquetage (50) et, d'autre part, des saillies encliquetables (44).

4. Maillon selon la revendication 3, **caractérisé par le fait que** la première plaquette d'échelonnement (32) est pourvue de creusures d'encliquetage (50) et la première perforation (30) est pourvue de saillies encliquetables (44).

5. Maillon selon l'une des revendications précédentes, **caractérisé par le fait que** des éléments (42) de venue en prise, s'engageant entre les jambages (46) du H et portant les moyens encliquetables (44) de la première perforation (30), sont disposés sur les côtés étroits (40) de ladite première perforation (30).

6. Maillon selon l'une des revendications précédentes, **caractérisé par le fait que** l'espacement mutuel des côtés longitudinaux (38) de la première perforation (30) augmente vers les côtés étroits (40) à partir du centre (52) de ladite perforation.

7. Maillon selon l'une des revendications précédentes, **caractérisé par le fait que** les côtés longitudinaux (38) de la première perforation (30) sont disposés, au centre (52) de cette dernière, à une moindre distance de la première plaquette d'échelonnement (32) que sur les côtés étroits (40), et sont de préférence en applique, au centre, sur ladite première plaquette d'échelonnement (32).

8. Maillon selon l'une des revendications précédentes, **caractérisé par le fait que** les zones d'encliquetage (49) sont réparties à espacements égaux les unes des autres sur la largeur (B) de la première plaquette d'échelonnement (32).

9. Maillon selon l'une des revendications précédentes, **caractérisé par le fait que** la première membrure de séparation (28) comporte plusieurs perforations (30, 34) de réalisation identique, munies de moyens d'encliquetage (44).

10. Maillon selon l'une des revendications précédentes, **caractérisé par le fait que** plusieurs membrures de séparation (28, 36) logées dans le canal de réception (20) comportent, à chaque fois, au moins une perforation (30, 34) pourvue de moyens encliquetables (44), toutes les perforations (30, 34) étant de réalisation identique.
